(19) **Europäisches Patentamt**

**European Patent Office**

**Office européen des brevets**

(11) **EP 1 102 140 B1**

(12) **EUROPEAN PATENT SPECIFICATION**

(45) Date of publication and mention
of the grant of the patent:
**12.02.2003 Bulletin 2003/07**

(51) Int Cl.⁷: **G05D 1/00**, G05D 1/02,
B25B 33/00

(21) Application number: **00126196.5**

(22) Date of filing: **18.10.1996**

(54) **Motion tracking apparatus for driverless vehicle**

Bewegungsabtastgerät für unbemanntes Fahrzeug

Dispositif de suivi de mouvenent pour véhicule sans conducteur

(84) Designated Contracting States:
**DE ES FR GB IT**

(30) Priority: **18.10.1995 US 5540 P**
**13.09.1996 US 713539**

(43) Date of publication of application:
**23.05.2001 Bulletin 2001/21**

(62) Document number(s) of the earlier application(s) in
accordance with Art. 76 EPC:
**96116811.9 / 0 769 735**

(73) Proprietor: **JERVIS B. WEBB INTERNATIONAL
COMPANY**
**Farmington Hills, Michigan 48331-5624 (US)**

(72) Inventors:
• **Alofs, Cornell W.**
**Petoskey, Michigan 49770 (US)**
• **Drenth, Ronald D.**
**Petoskey, Michigan 49770 (US)**

(74) Representative: **Tönhardt, Marion, Dr.**
**Forrester & Boehmert,**
**Pettenkoferstrasse 20-22**
**80336 München (DE)**

(56) References cited:
**US-A- 4 667 365        US-A- 4 816 998**
**US-A- 5 218 556        US-A- 5 364 113**

# EP 1 102 140 B1

## Description

### FIELD OF THE INVENTION

This invention relates to a accounting for the lateral swivel caster fitted with rotational and swivel angle measurement sensors mounted to a driverless vehicle so that the lateral motion of the vehicle can be detected and accounted for by the vehicle's navigation and guidance system.

### BACKGROUND OF THE INVENTION

Navigation and guidance control for automated guidance vehicles are described in GB-A-2,158,965 and U.S. Patents 4,847,769, 4,816,998 and 5,175,415. GB-A-2,158,965 and U.S. Patent 4,847,769 both describe vehicles in which the movement is predicted by a dead reckoning system which determines the position of the vehicle at any given time by sensing the steering angle and the angle of rotation of a controlled steering caster during a short time interval. U.S. Patent 4,847,769 further describes a system where the predicted position is frequently checked and corrected against an actual position determined by a vehicle mounted laser scanning and reference frame mounted target system. The error between the predicted position and the actual position is utilized to determine an average crabbing angle which is fed through a Kalman filter calculation and used as a correction factor in calculating the next predicted position of the vehicle.

U.S. Patent 4,816,998 discusses a vehicle that uses a caster wheel having both an angle measuring sensor and a wheel rotation measuring sensor for enabling the navigation and guidance system to calculate a mean distance traveled, a change in angle of an axis on the vehicle and vehicle heading change assuming ideal travel along a fixed radius arcuate path.

U.S. Patent 5,175,415 discusses an apparatus for measuring the forward and reverse movement of a vehicle by placing a separate encoder wheel adjacent to each non-pivoting drive wheel.

All of the navigation and guidance systems heretofore are limited because none of these systems determine their current position by measuring and accounting for the lateral movement of the vehicle. The lateral movement of the vehicle is often referred to as crabbing, scrubbing or side slip. The lateral movement of the vehicle is determined with respect to the vehicle's pivot point. This is typically a location along the longitudinal centerline of the vehicle that the navigation and guidance system attempts to direct along the selected path. A vehicle may experience lateral motion for a variety of reasons, for instance, when the vehicle is: i) misaligned, ii) turned, where the wheels pivot, distort and/or slip, and iii) intentionally steered laterally. Accordingly, the overall tracking accuracy of the systems heretofore is compromised by their inability to measure and account for the lateral movement component in the vehicle's change of position.

It is therefore an object of the present invention to provide a system that determines the change of position of a vehicle regardless of the direction the vehicle travels.

It is another object of the present invention to provide a system that can measure and determine the movement of the vehicle in the forward, reverse and any lateral direction.

It is yet another object of the present invention to provide a navigation and guidance control system that adjusts the steering of the vehicle responsive to the lateral movement of the vehicle.

It is a further object of the present invention to provide a navigation and guidance system on-board the vehicle that steers the vehicle taking into account the vehicle's lateral movement, without requiring an absolute position referencing system that utilizes off-board position identifiers, reflectors or reference markers.

It is still another object of the present invention to provide an angular motion sensor and a freely pivoting caster wheel having a free-wheeling track wheel for sensing the vehicle's movement in two-dimensions with respect to the vehicle frame reference.

It is still a further object of the present invention to provide a navigation and guidance system equipped with a gyroscope and a freely pivoting spring loaded caster wheel having a spherical shaped contact surface, that senses the change of position of the vehicle in two-dimensions, to provide better control of the vehicle.

It is yet a further object of the present invention to provide a navigation and guidance system equipped with a gyroscope and a distance travelled and vehicle rotation sensing caster that allows the caster to be mounted at any location on the vehicle.

It is still a further object of the present invention to provide a navigation and guidance system equipped with an angular motion sensor and a free wheeling, freely pivoting, non-load bearing track wheel caster that detects movement of the vehicle in two-dimensions, with respect to the vehicle frame reference, to provide more accurate control of the vehicle.

These and other objects of the present invention will become readily apparent after studying and understanding the present invention, as hereinafter described.

## SUMMARY OF THE INVENTION

The present invention is a caster provided with sensing means, as defined by claim 1.

## BRIEF DESCRIPTION OF THE DRAWINGS

FIG. 1 is a perspective view of a dual-end steering driverless vehicle equipped with a track wheel caster in accordance with the present invention.

FIG. 2a is a perspective view of a track wheel caster assembly in accordance with the preferred embodiment of the present invention.

FIG. 2b is a side view of the track wheel caster assembly depicted in FIG. 2a.

FIG. 3 is a diagrammatical representation of a vehicle equipped with a track wheel caster in accordance with the preferred embodiment of the present invention.

FIG. 4 is a cross-sectional view of an absolute encoder fitted with an electric slip ring assembly in accordance with the preferred embodiment of the present invention.

## DETAILED DESCRIPTION OF THE INVENTION

Before the invention is explained in detail, it is to be understood that the invention is not limited in its application to the details of construction and the arrangements of components set forth in the following description or illustrated in the drawings. The invention is capable of other embodiments and of being practiced or being carried out in various ways. Also, it is to be understood that the phraseology and terminology used herein is for the purpose of description and should not be regarded as limiting.

A preferred embodiment of the present invention is a driverless vehicle comprising a navigation and guidance system having an angular motion sensor and a track wheel caster assembly equipped with a caster pivot sensor and a wheel rotation sensor to determine the relative position of the vehicle by taking into account substantially all movement of the vehicle along the surface upon which the vehicle is travelling. These sensors enable the navigation system to more accurately determine the vehicle's current position and enable the guidance system to guide the vehicle.

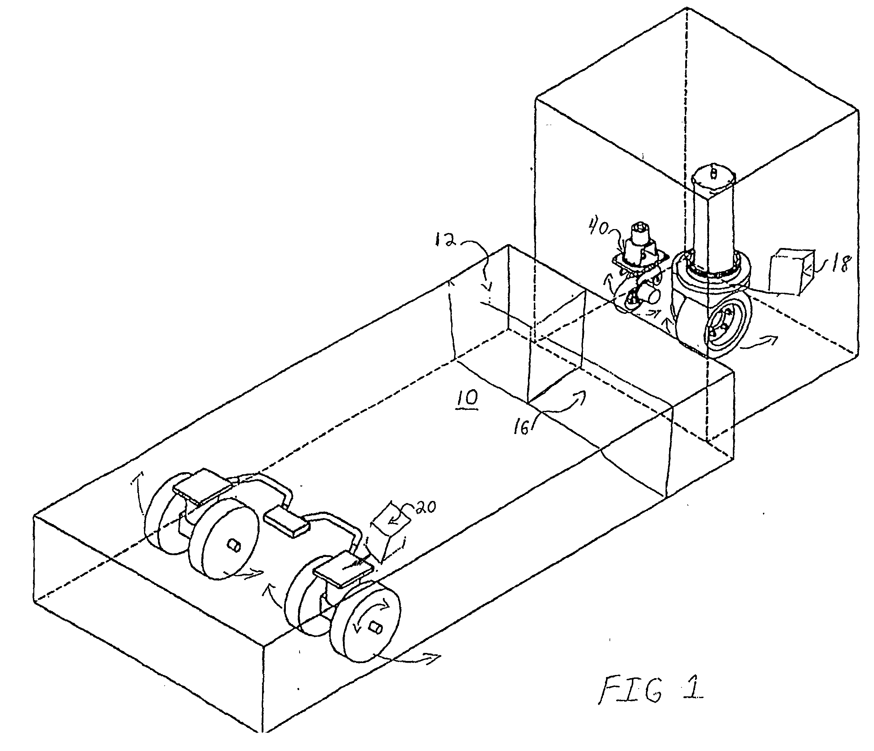

FIG. 1 depicts a dual-end steering driverless vehicle **10** comprising a navigation and guidance system equipped with an angular motion sensor **12**, a track wheel caster assembly **40,** at least one computer processor **16**, and a front and a rear steering mechanism **18** and **20**, respectively. The vehicle **10** can be any vehicle suitable for this purpose including but not limited to driverless, single-end or dual-end steered, wire and non-wire guided vehicles. Similarly, the computer processor and steering mechanism may be of any conventional type known to be used for this purpose.

The angular motion sensor is employed to supply information about the current heading of the vehicle. Typically, the angular motion sensor is a gyroscope which may be any type of gyroscope suitable for this purpose and may be selected to suit the particular application. Preferably, the gyroscope will be of the solid state rate gyroscope type.

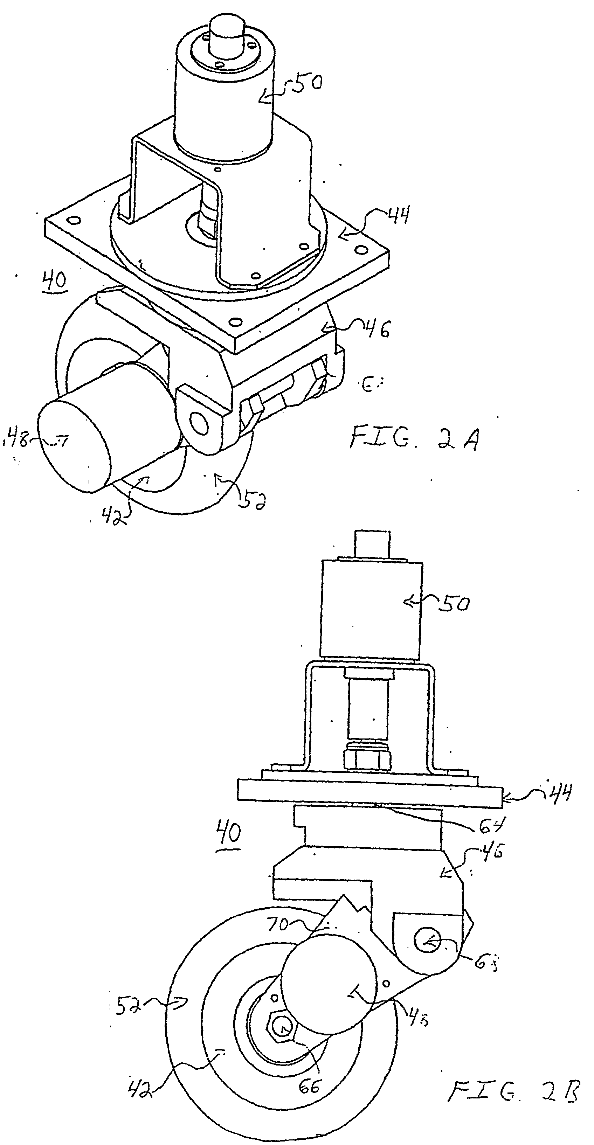

The track wheel caster assembly **40,** as best depicted in FIGs. 2(a&b), comprises: a free wheeling contact wheel **42,** a mounting plate **44,** a freely pivoting castor sub-assembly **46**, a wheel rotation sensor **48**, and a caster pivot sensor **50.** The design of the track wheel caster assembly **40** will depend on the particulars of the application but the design criteria should attempt to optimize the traction of the contact wheel **42** while minimizing its pivot friction.

The contact wheel **42** may be fitted with a tire **52** to achieve better contact properties. A soft tire provides better traction while a harder tire results in lower pivot friction. Therefore, a tire having characteristics that compromise between these two competing factors is preferred. Although the tread profile of the tire **52** may be selected based on the specifics of a particular application, a preferred tread profile is spherically shaped to distribute wheel loading symmetrically about the contact point.

The freely pivoting castor sub-assembly **46** typically comprises a horizontal offset, sometimes referred to as a "caster offset" or "caster lead", between the caster stem **64** and the contact wheel axle **66**. This horizontal offset reduces the force required to cause the caster to pivot. The sub-assembly **46** can optionally be adapted with a spring loaded pivot joint **68** and fork **70** that joins the contact wheel **42** to the sub-assembly in a manner which enables the contact wheel **42** to move up and down with respect to the mounting plate **44** to allow the contact wheel **42** to accommodate undulations in the surface.

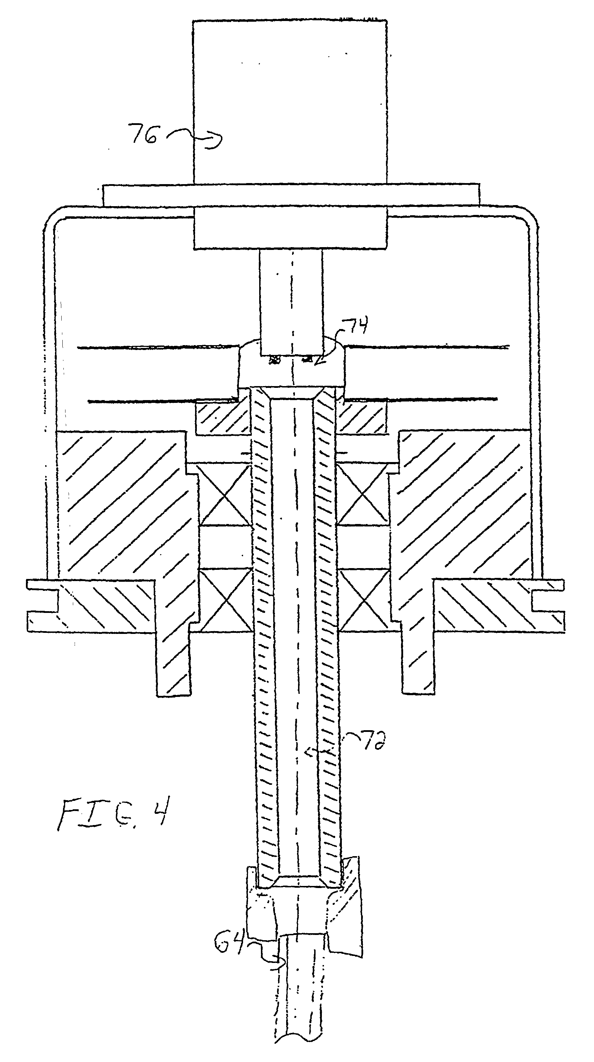

The wheel rotation sensor **48** may be any device that provides a signal responsive to the rotational movement of the contact wheel which may include optical, magnetic, electro-mechanical sensors or the like. Preferably, the wheel rotation sensor **48** is an incremental shaft encoder positioned about the contact wheel axle **66**. More preferably, the incremental shaft encoder will be of the quadrature type which additional provides the direction of rotation. Additionally, the caster pivot sensor **50** may be any device that provides a signal responsive to the rotational movement of the caster sub-assembly **46** with respect to the caster mounting plate **44.** Preferably, the caster pivot sensor **50** is an absolute shaft encoder, as depicted in FIG. 4, positioned on the caster stem **64.** An absolute shaft encoder provides a signal identifying the absolute position of the measured shaft.

In a more preferred configuration, the caster stem **64** and the absolute shaft encoder will have a hollow shaft **72** and the body of the absolute encoder will have an opening through the center axis of the body **74** leading up to an electric slip ring assembly **76,** as shown in FIG. 4, to accommodate signal wires from the wheel rotation sensor **48.** An electric slip ring is a device that maintains electrical communication between connections on a first member, commonly referred to as the rotor, that rotates with respect to a second member, commonly referred to as the stator, and corresponding connection on the second member. The signal wires from the wheel rotation sensor **48** will be routed through the hollow caster stem **64,** the absolute encoder shaft **72,** the body of the encoder **74** and connected to the rotor side of the slip ring assembly **76.** Although the signal from the wheel rotation sensor **48** can be communicated to the navigation and guidance system in a variety of ways dependent on the design of the vehicle, this preferred configuration allows unlimited caster pivot rotation in either direction.

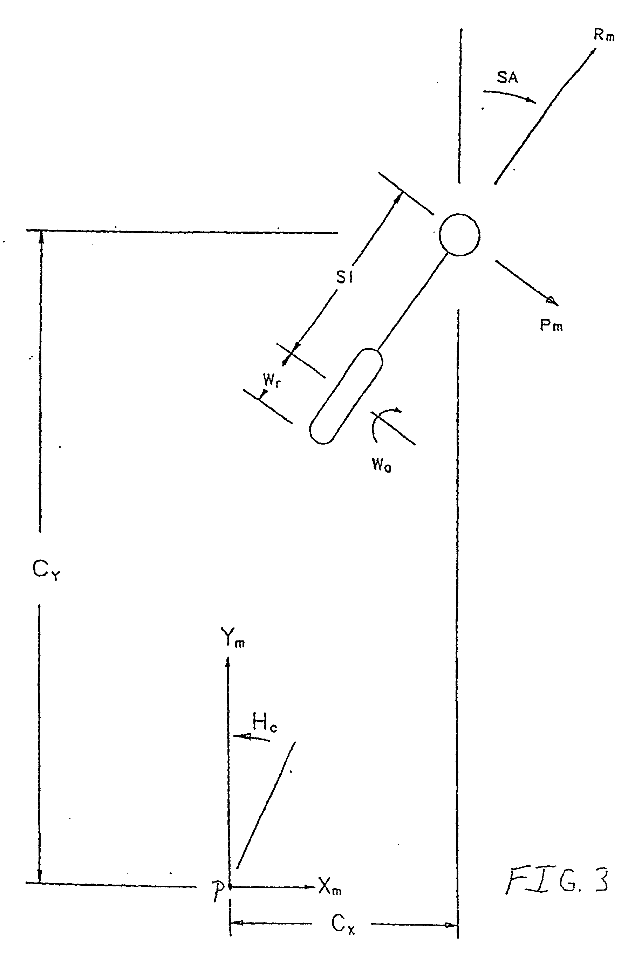

The functioning of a vehicle adapted with a track wheel caster assembly, as depicted in FIGs 2 (a&b), in accordance with a preferred embodiment of the present invention can be described as follows and best understood by referencing FIG. 3. The vehicle's navigation and guidance system on the vehicle operates in a conventional manner by sampling data from various sensors at short time intervals and steering the vehicle responsive to information received from these inputs. More specifically, the navigation and guidance system attempts to guide a point on the vehicle designated as the pivot point **P** along a selected path or toward a designated location. The pivot point **P** is typically a location along the longitudinal centerline of the vehicle. The selection of this point may be determined from the design and/or dynamics of the vehicle.

The pivot point **P** is used as a reference point or origin for calculating vehicle movement with respect to the vehicle's coordinate system, often referred to as vehicle frame reference. The calculations of **Ym**, that component of the vehicle's change of position in the for and aft direction (Y-direction), and **Xm**, that component of the vehicle's change of position in the lateral direction (X-direction), are all referenced to an X,Y coordinate system having the pivot point **P** as the origin.

The track wheel caster assembly is mounted at any arbitrary or convenient location on the vehicle. The position of the caster assembly, specifically the center of the caster pivot axis **64,** relative to the pivot point is measured. The measured distance between the two points is recorded as **Cy** the distance in the Y-direction and **Cx** the distance in the X-direction both with respect to the vehicle's frame of reference. In addition, the radius **Wr** of the caster's contact wheel **42** with tire **52** and the distance **Sl** of the horizontal offset are measured and recorded. These constants are used as part of the calculation of **Ym** and **Xm**.

As the vehicle moves, the wheel rotation sensor **48** and/or the caster pivot sensor **50,** depending on the vehicle's direction of travel, will sense the motion and transmit a corresponding signal to the navigation and guidance system's computer processor **16.** The motion of the vehicle **Rm**, as sensed by the wheel rotation sensor **48,** is the product of the wheel rotation angle **Wa,** in radians, determined directly from information supplied by the wheel rotation sensor and the wheel radius **Wr**. The motion of the vehicle **Pm**, as sensed by the caster pivot sensor **50,** is the product of the change in the pivot angle (final angle **Sf** minus initial angle **Si**) of the caster less the vehicle's heading change **Hc**, as determined from the angular motion sensor, and the distance of the caster's horizontal offset **Sl**. The average caster angle **SA** between two measuring intervals is the initial angle **Si** plus half the change in the pivot angle over the measurement interval. Once the measurements and calculations of these variables are determined, it should be clear that

$$Xm = Rm \cdot Sin(SA) + Pm \cdot Cos(SA) + Cy \cdot Hc$$

and

$$Ym = Rm \cdot Cos(SA) - Pm \cdot Sin(SA) - Cx \cdot Hc.$$

The accuracy of these calculation is increased as the time interval between measurement samples is decreased.

The values of **Xm** and **Ym** are then used by the navigation and guidance system to calculate the vehicle's current location so that the guidance system can determine how to direct the vehicle along a desired path or toward a desired location.

**EXAMPLES**

The following theoretical examples provide further understanding of these calculations.

Example 1

A vehicle travels along a straight path then reverses direction with no lateral movement (Xm=0) and no heading change (Hc=0).

Then:

$$Xm = Rm \cdot Sin(SA) + Pm \cdot Cos(SA) = 0$$

$$Ym = Rm \cdot Cos(SA) - Pm \cdot Sin(SA)$$

Initially:

$$SA = 0 \text{ deg. and } Ym = Rm.$$

Note that the sign of Ym is negative because Rm is negative (wheel is rotating backwards). This is an unstable condition which could, in theory, continue indefinitely. Caster translation begins. when a disturbance causes SA to change.

During translation, motion is constrained by:

$$\frac{RM}{PM} = -\frac{Cos\ (SA)}{Sin\ (SA)}$$

When SA = (+ or -) 90 deg., the wheel stops rotating and:

$$YM = (+ \text{ or } -) Pm$$

Caster translation continues indefinitely as SA approaches 180 deg. A practical limit is defined by the resolution of the caster pivot encoder. Caster translation is complete when the caster pivot angle measures 180 deg.

Finally:

$$SA = 180 \text{ deg. and } Ym = -Rm.$$

Note that the sign of Ym is negative because Cos(SA)=-1.

Example 2

A vehicle is pushed sideways so all motion is lateral (Ym=0) with no heading change (Hc=0).

Then:

$$Xm = Rm \cdot Sin(SA) + Pm \cdot Cos(SA)$$

$$Ym = Rm \cdot Cos(SA) - Pm \cdot Sin(SA) = 0$$

Initially:

$$SA = 0 \text{ deg. and } Xm = Pm.$$

Note that the wheel does not move and initial motion is detected as caster pivot motion only. However, caster pivot causes SA to change and caster translation begins immediately.

During translation, motion is constrained by:

$$\frac{RM}{PM} = \frac{Sin\ (SA)}{Cos\ (SA)}$$

Caster translation continues indefinitely as SA approaches (+ or -) 90 deg. Practical caster translation is complete when the caster pivot sensor measures (+ or -) 90 deg.

Finally:

$$SA = (+\ or\ -)\ 90\ deg.\ and\ Xm = (+\ or\ -)\ Rm$$

Note that Rm is always positive and sign of Xm is defined by Sin(SA).

Example 3

A vehicle is forced to rotate around the point of wheel contact with no wheel rotation (Rm=0) and a fixed caster pivot angle (SA = Sf = Si = 0 deg.)

Then:

$$Xm = Pm + Cy \cdot Hc = -Sl \cdot Hc + Cy \cdot Hc = (Cy - Sl) \cdot Hc$$

$$Ym = -Cx \cdot Hc$$

Note that all motion is due to heading change multiplied by a fixed dimensional offsets.

Example 4

A vehicle is forced to rotate about the caster stem with no wheel rotation (Rm = 0) and caster pivot angle is constrained by heading change (Sf-Si = Hc).

Then:

$$Pm = Sl \cdot (Sf - Si - Hc) = 0$$

And:

$$Xm = Cy \cdot Hc$$

$$Ym = -Cx \cdot Hc$$

Note, again, that all motion is due to heading change multiplied by fixed dimensional offsets.

Example 5

A vehicle travels along a straight path, then, stops and initiates a 45 deg. crab maneuver (Xm = Ym) with no heading change (Hc = 0).

Then:

$$Xm = Rm \cdot Sin(SA) + Pm \cdot Cos(SA)$$

$$Ym = RM \cdot Cos(SA) - Pm \cdot Sin(SA)$$

Initially:

$$S_A = 0 \text{ deg. and } Xm = Rm = Ym = Pm$$

Note that wheel rotation motion and caster pivot motion are equal. However caster pivot causes SA to change and caster translation begins immediately.

During translation, motion is constrained by:

$$Rm \cdot Sin(SA) + Pm \cdot Cos(SA) = Rm \cdot Cos(SA) - Pm \cdot Sin(SA)$$

Center translation continues indefinitely as SA approaches 45 deg. Practical translation is complete when the caster pivot sensor measures 45 deg.

Finally:

$$SA = 45 \text{ deg. and } Pm = 0$$

$$Xm = Rm \cdot Sin(SA) \quad Ym = Rm \cdot Cos(SA)$$

Note that all motion is due to wheel rotation multiplied by a constant derived from SA. A similar analysis is valid for any crab angle.

## Claims

1. A caster comprising:

   mounting means for affixing said caster to a device; a free wheeling contact wheel assembly having a free wheeling contact wheel which rotates on an axle;

   first means for sensing rotation of said free wheeling contact wheel assembly to said mounting means, wherein a pivoting means enables said free wheeling contact wheel assembly to rotate about an axis perpendicular to said axle;

   second means for sensing rotation of said free wheeling contact wheel assembly about said axis and for sensing lateral motion of the vehicle as the free wheeling contact wheel travels along a surface; and

   connecting means for electrically connecting said first means to a point fixed with respect to said mounting means.

2. The caster of claim 1, wherein said connecting means comprises:

   an electric slip ring which enables said assembly to rotate about said axis limitlessly in either direction while maintaining electrical communication between said first means and said point.

3. The caster of claim 2, wherein said slip ring is centered about said axis.

4. The caster of claim 1, wherein said connecting means comprises:

   a set of conductors routed from said first means through an opening in said assembly and through an opening in said second means and connected to an electric slip ring positioned on said axis which enables said assembly to rotate about said pivot means limitlessly in either direction while maintaining electrical communication with a set of terminals which remain fixed with respect to said mounting means; wherein said openings extend and are centered along said axis.

5. The caster of claim 1, wherein the device is a driverless vehicle.

# EP 1 102 140 B1

**Patentansprüche**

**1.** Schwenkrolle, mit:

einer Montageeinrichtung zum Befestigen der Schwenkrolle an einer Vorrichtung, einer frei rollenden Kontaktradanordnung, welche ein frei rollendes Kontaktrad hat, das sich auf einer Achse dreht;

einer ersten Einrichtung zum Abfühlen der Drehung des frei rollenden Kontaktrades Montageeinrichtung, wobei eine Schwenkeinrichtung es ermöglicht, daß sich das frei rollende Kontaktrad um eine Achse senkrecht zu der genannten Achse dreht;

einer zweiten Einrichtung zum Abfühlen der Drehung der frei rollenden Kontaktradanordnung um die Achse und zum Abfühlen der seitlichen Bewegung des Fahrzeuges, wenn sich das frei rollende Kontaktrad entlang einer Oberfläche bewegt; und

einer Verbindungseinrichtung zum elektrischen Verbinden der ersten Einrichtung mit einem Punkt, der in bezug auf die Montageeinrichtung fest ist.

**2.** Schwenkrolle nach Anspruch 1, bei der die Verbindungseinrichtung aufweist:

einen elektrischen Schlupfring, der es ermöglicht, daß die Anordnung sich um die Achse unbegrenzt in jede Richtung dreht, wobei die elektrische Kommunikation zwischen der ersten Einrichtung und dem Punkt aufrechterhalten wird.

**3.** Schwenkrolle nach Anspruch 2, bei der der Schlupfring um die Achse zentriert ist.

**4.** Schwenkrolle nach Anspruch 1, bei der die Verbindungseinrichtung aufweist:

einen Satz Leiter, die von der ersten Einrichtung durch eine Öffnung in der Anordnung und durch eine Öffnung in der zweiten Einrichtung geführt sind und mit einem elektrischen Schlupfring verbunden sind, der auf der Achse positioniert ist, was es ermöglicht, daß sich die Anordnung um die Schwenkeinrichtung unbegrenzt in jede Richtung dreht, wobei die elektrische Kommunikation mit einem Satz Anschlüsse beibehalten wird, welche in bezug auf die Anbringeeinrichtung fest bleiben; wobei sich die Öffnungen entlang der Achse erstrecken und auf ihr zentriert sind.

**5.** Schwenkrolle nach Anspruch 1, bei der die Vorrichtung ein führerloses Fahrzeug ist.

**Revendications**

**1.** Roulette, comprenant :

un moyen de montage pour fixer ladite roulette à un dispositif ; un ensemble de roue de contact tournant en roue libre comportant une roue de contact tournant en roue libre sur un essieu ;
un premier moyen pour détecter la rotation dudit ensemble de roue de contact tournant en roue libre par rapport audit moyen de montage, un moyen formant pivot permettant audit ensemble de roue de contact tournant en roue libre de tourner autour d'un axe perpendiculaire audit essieu ;
un second moyen pour détecter la rotation dudit ensemble de roue de contact tournant en roue libre autour du axe et pour détecter un mouvement latéral du véhicule lorsque la roue de contact tournant en roue libre roule sur une surface ; et
un moyen de connexion pour connecter électriquement ledit premier moyen à un point fixe par rapport audit moyen de montage.

**2.** Roulette selon la revendication 1, dans laquelle ledit moyen de connexion comporte :

une bague collectrice électrique qui permet audit ensemble de tourner sans limite dans un sens ou dans l'autre autour dudit axe tout en maintenant une communication électrique entre ledit premier moyen et ledit point.

3. Roulette selon la revendication 2, dans laquelle ladite bague collectrice est centrée autour dudit axe.

4. Roulette selon la revendication 1, dans laquelle ledit moyen de connexion comporte :

un jeu de conducteurs passant, depuis ledit premier moyen, par une ouverture dudit ensemble et par une ouverture dudit second moyen et connectés à une bague collectrice électrique placée sur ledit axe qui permet audit ensemble de tourner sans limite dans un sens ou dans l'autre autour dudit moyen formant pivot tout en maintenant une communication électrique avec un jeu de bornes qui restent fixes par rapport audit moyen de montage, lesdites ouvertures s'étendant et étant centrées suivant ledit axe.

5. Roulette selon la revendication 1, le dispositif étant un véhicule sans conducteur.

FIG 1

FIG. 2A

FIG. 2B

FIG. 3

76

74

~72

FIG. 4

64